# EUROPEAN PATENT APPLICATION

(11) **EP 3 617 113 A1**
(43) Date of publication of application: **04.03.2020**
(21) Application number: 19191810.1
(22) Date of filing: 14.08.2019
(51) Int. Cl.: B66B 1/46

(54) **LAST-MINUTE HALL CALL REQUEST TO A DEPARTING CAB USING GESTURE**

(30) Priority: 14.08.2018 IN 201811030565
(71) Applicant: Otis Elevator Company, Farmington, Connecticut 06032 (US)
(72) Inventor: VUSHAKOLA, Ranjith, 500081 Telangana (IN)
(74) Representative: Dehns

(57) **Abstract**

Provided are embodiments of a system and method for performing a last-minute hall call request to a departing cab using gestures. The embodiments include a sensing device that is in communication with a processor, wherein the sensing device is configured to monitor and detect a gesture from a potential passenger, and a processor configured to process video data received from the sensing device. The embodiments also include a video analyzer configured to predict a hall call request based at least in part on the gesture, and a controller is configured to control an operation of the system based at least in part on predicting the hall request.

## Description

### BACKGROUND

The subject matter disclosed herein relates generally to elevator systems, and more particularly, to last-minute hall call request to a departing cab using gestures.

In many elevator configurations approaching passengers use the hall call request buttons that are located next to one or more elevators to request an available elevator. In some scenarios, passengers attempt to board a departing elevator at the last-minute and in many cases, the passengers are unsuccessful in boarding the elevator due to a gap in time when placing the hall call request button. In some instances, the passengers that are aboard the elevator may politely hold the elevator door open for the approaching passengers. However, this is not always the case. Due to the delay in pressing the hall call request button, the approaching passengers are unable to board the elevator and must wait for another elevator to pick up the passenger.

### BRIEF SUMMARY

According to an embodiment, a system for performing a last-minute hall request to a departing cab using gesture, the system includes a sensing device that is in communication with a processor, wherein the sensing device is configured to monitor and detect a gesture from a potential passenger, and a processor configured to process video data received from the sensing device. The system also includes a video analyzer configured to predict a hall call request based at least in part on the gesture, and a controller configured to control an operation of the system based at least in part on predicting the hall request.

In addition to one or more of the features described herein, further embodiments include an elevator controller that is configured to control an operation of an elevator car.

In addition to one or more of the features described herein, or as an alternative, further embodiments include a multi-elevator system, wherein the camera provides an input to control a plurality of elevator cars.

In addition to one or more of the features described herein, or as an alternative, further embodiments include a plurality of elevator controllers that are coupled to a central controller (CPIB), the CPIB is in communication with the processor to transmit a hall call request command to the plurality of elevator controllers to delay the departure of an elevator car of the plurality of elevators.

In addition to one or more of the features described herein, or as an alternative, further embodiments include a video analyzer that is configured to predict a hall call request based at least in part on the gesture data.

In addition to one or more of the features described herein, or as an alternative, further embodiments include a video analyzer that is configured to determine the gesture includes at least one of a direction of the potential passenger, a running speed of the potential passenger, or a hand motion of the potential passenger received from the processor using video content analytics to predict the hall request.

In addition to one or more of the features described herein, or as an alternative, further embodiments include a load sensor that is configured to detect a load of an elevator car prior to controlling the system based at least in part on predicting the hall request.

In addition to one or more of the features described herein, or as an alternative, further embodiments include controlling the system includes at least one of delaying the departure of an elevator car, opening closed elevator doors, or delaying a closing of elevator doors of the elevator car.

In addition to one or more of the features described herein, or as an alternative, further embodiments include a sensing device that is a video camera.

According to another embodiment, a method for a system for performing a last-minute hall request to a departing cab using gesture is provided. The detecting, using one or more sensing devices, a gesture of a potential passenger, and analyzing the gesture of the potential passenger. The method also includes predicting a call request based at least in part on the analysis of the gesture, and controlling an operation of a system based at least in part on the predicted call request.

In addition to one or more of the features described herein, further embodiments include detecting a load of the elevator car, and controlling the operation the system is based at least in part on the load of the elevator and the predicted gesture.

In addition to one or more of the features described herein, or as an alternative, further embodiments include determining at least one of a direction of the potential passenger, a running speed of the potential passenger, or a hand motion of the potential passenger received from the processor using video content analytics

In addition to one or more of the features described herein, or as an alternative, further embodiments include a video analyzer that is configured to predict a hall call request based at least in part on the gesture data.

In addition to one or more of the features described herein, or as an alternative, further embodiments include a multi-elevator system, wherein the one or more sensing devices receive an input to control a plurality of elevator cars.

In addition to one or more of the features described herein, or as an alternative, further embodiments include a plurality of elevator controllers that are coupled to a central controller (CPIB), the CPIB is in communication with a processor to transmit a hall call request command to the plurality of elevator controllers delay the departure of an elevator.

In addition to one or more of the features described herein, or as an alternative, further embodiments include sensing devices that are cameras configured to capture video of the potential passenger.

In addition to one or more of the features described herein, or as an alternative, further embodiments include receiving load sensor data of an elevator car prior to controlling the system based at least in part on predicting the hall request.

In addition to one or more of the features described herein, or as an alternative, further embodiments include delaying the departure of an elevator car or delaying a closing of elevator doors of the elevator car.

Technical effects of embodiments of the present disclosure include providing an opportunity for a potential passenger to board a lightly loaded elevator car by delaying its departure. In addition, the hall request is predicted and received prior to the potential passenger reaching the hall call request button in the elevator lobby by using a camera, processor, and logic to interpret a gesture from the potential passenger.

The foregoing features and elements may be combined in various combinations without exclusivity, unless expressly indicated otherwise. These features and elements, as well as the operation thereof, will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The present disclosure is illustrated by way of example and not limited in the accompanying figures in which like reference numerals indicate similar elements.
FIG. 1 is a schematic illustration of an elevator system that may employ various embodiments of the present disclosure;
FIG. 2 depicts a system for performing a last-minute hall call request to a departing cab using gesture in accordance with one or more embodiments;
FIG. 3 depicts a multi-elevator system for performing a last-minute hall call request to a departing cab using gesture in accordance with one or more embodiments; and
FIG. 4 depicts a flowchart of a method for performing a last-minute hall call request to a departing cab using gesture in accordance with one or more embodiments.

### DETAILED DESCRIPTION

In today's fast-paced environment, many passengers approaching the elevators may be in a rush to their destination. Oftentimes the approaching passengers nearly miss a departing elevator because they were unable to place an elevator call fast enough. This causes a delay to the passenger in the lobby, and in some instances, the elevators are required to make more extra trips to get the passenger instead of delaying the departure of one or more elevators to allow the approaching passenger to board. In addition, the problem becomes worse when the departing elevator is lightly loaded or has sufficient capacity for the approaching passenger.

There may be a need to delay a departing elevator to maximize the capacity and efficiency of the elevator while simultaneously increasing the passenger experience and reducing the number of trips of an elevator car by detecting passenger gestures to place the elevator call request.

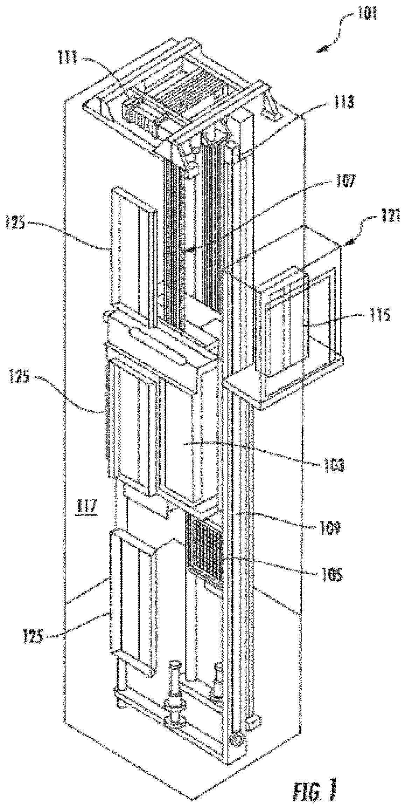

FIG. 1 is a perspective view of an elevator system 101 including an elevator car 103, a counterweight 105, a tension member 107, a guide rail 109, a machine 111, a position reference system 113, and a controller 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counter weight, as known in the art. For example, without limitation, the position reference system 113 can be an encoder, sensor, or other system and can include velocity sensing, absolute position sensing, etc., as will be appreciated by those of skill in the art.

The controller 115 is located, as shown, in a controller room 121 of the elevator shaft 117 and is configured to control the operation of the elevator system 101, and particularly the elevator car 103. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller may be located remotely or in the cloud.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. FIG. 1 is merely a non-limiting example presented for illustrative and explanatory purposes.

In other embodiments, the system comprises a conveyance system that moves passengers between floors and/or along a single floor. Such conveyance systems may include escalators, people movers, etc. Accordingly, embodiments described herein are not limited to elevator systems, such as that shown in Figure 1.

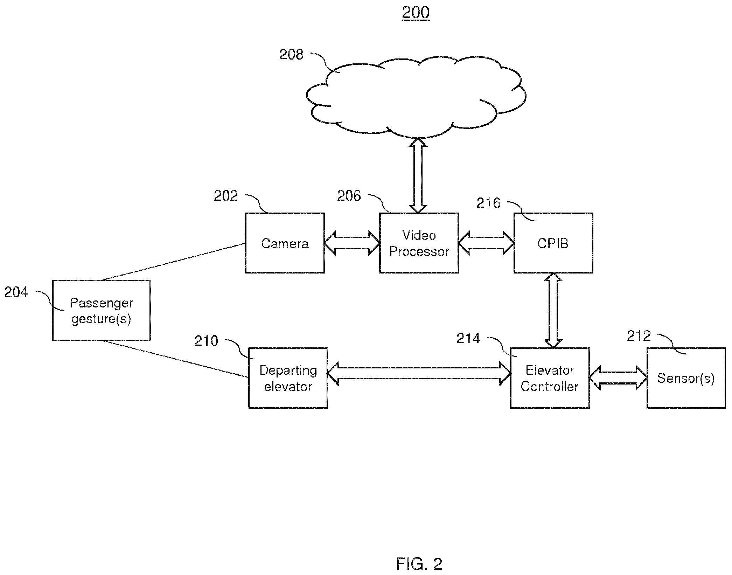

Now referring to FIG. 2, a system 200 for placing a last-minute hall call request to a departing cab using gesture in accordance with one or more embodiments is shown. The system 200 includes a sensing device 202 that is positioned in an elevator lobby or hallway to detect approaching potential passengers. The sensors 202 can include cameras (such as video camera, thermal camera, depth sensor, etc.). The camera can be positioned in the lobby to detect a potential passenger. In other embodiments, the camera can be located in a hallway to monitor the passengers that may be approaching the elevator car(s). The camera is configured to detect passenger gestures 204 that can be used to place a hall call request without being required to press the physical call buttons in the lobby. The video data received from the sensing device 202 is provided to the video processor 206. The video processor 206 is configured to process the video frame-by-frame and present the video data to the video analyzer 208 to perform artificial intelligence video content analytics to properly predict whether an approaching passenger's gesture(s) is indicating an intent to board an elevator car. This optimizes and reduces the chances of inadvertently delaying the departure of an elevator car 210 from a passenger that does not desire to use the elevator. The analytics can be optimized overtime to increase the probability of correctly predicting the gestures that are used place hall call requests. In addition, it should be understood that other gestures can be used to predict a hall request from an approaching passenger. The gestures indicating an intent can include a running potential passenger, the direction of the potential passenger, or a hand motion indicating a desire to board the elevator car.

The video analyzer 208 analyzes the video content frame by frame to determine whether the gesture detecting by the approaching passenger intends to board the elevator by matching a signature of a passenger desiring to board the elevator. The video analyzer 208 determines whether the approaching passenger is running and also determines the direction in which the approaching passenger is running.

If the video analyzer 208 determines the approaching passenger is not running, then the system 200 infers there is no urgency or need to delay the departure of an elevator. The video analyzer 208 also determines the direction of the elevator the passenger is approaching. If the approaching passenger is directed towards an elevator and the elevator has not departed, its departure can be delayed and the doors reopened to allow the passenger to board the elevator car. In a multi-elevator system including a plurality of elevator doors, if it is determined that a passenger is approaching a different elevator that has already departed or the passenger is not approaching a targeted elevator, the elevator will not be delayed.

If a match is determined, then the elevator departure can be delayed. In the event the elevator doors are closed, the elevator doors can be reopened allowing the potential passenger to board. In the event the elevator doors are open, the amount of time the doors are opened can be extended by a configurable delay.

If the video analyzer 208 determines the gesture indicates the intent to place a hall request, a command is sent to the controller CPIB 216 to the elevator controller 214 to control take an action on the departing elevator 210.

In one or more embodiments, the capacity of the elevator car is detected by a sensor such as sensor 212 that is in configured to communicate with the elevator controller 214. In the event the elevator car 210 is at or near its maximum capacity, the system will not respond to the gesture and allow the elevator car 210 to depart without experiencing any delay. The capacity of the elevator car 210 can be determined using load sensors (such as pressure or pressure sensors, piezo electric sensors, etc. that are equipped on the elevator. It should be understood that other types of sensors such as cameras and/or counters can be coupled to the controller to provide information on the capacity of the elevator car 210.

In the event the elevator car 210 is not at or near its maximum capacity, the departure of the elevator car can be delayed responsive to receiving a gesture 204 from an approaching passenger that indicates a desire to board the elevator car. In one or more embodiments, the load sensors of the elevator can be configured to detect if a configurable load threshold has been reached to determine whether the elevator should be delayed.

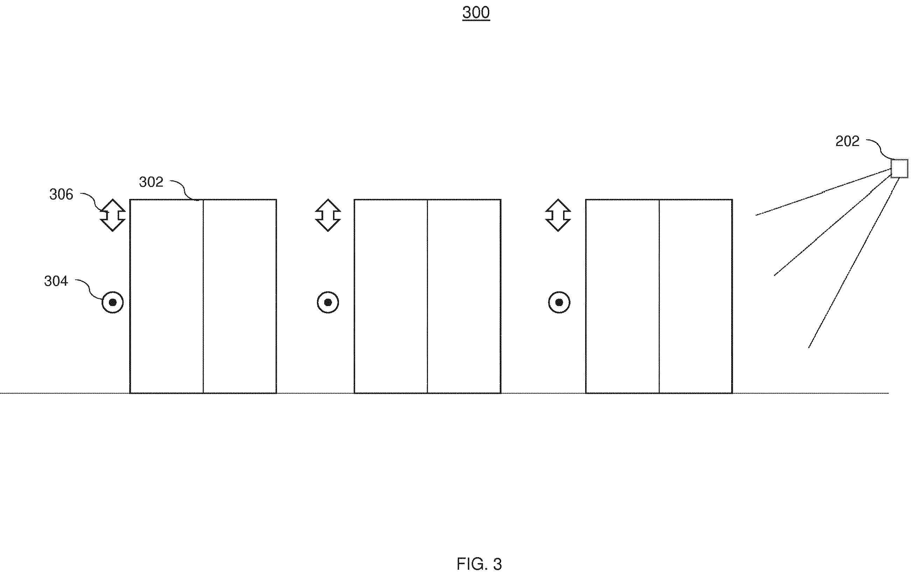

Now referring to FIG. 3, a multi-elevator system 300 for placing a last-minute hall call request to a departing cab using gestures in accordance with one or more embodiments is shown. The system 300 includes a plurality of elevator 302 having elevator call buttons 304 and sensing device 202 monitoring the lobby area of the multi-elevator system 300. In some configurations, a single elevator call button 304 may be used to place an elevator call request for one of the plurality of elevators 302. In addition, an indicator 306 can be displayed outside of the elevator 302 to indicate to a potential passenger the direction of travel of the elevator 302. A potential passenger may be running towards an elevator 302 heading in a particular direction indicated by the indicator 306. The video analyzer 208 of FIG. 2 can use this information to select the elevator 302 as a candidate for delaying the departure of the elevator 302. In the event, the other gesture criteria and load sensor thresholds are met, the selected elevator 302 can be delayed.

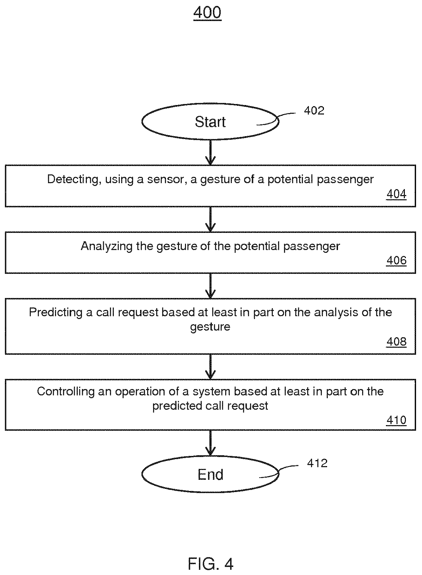

Now referring to FIG. 4, a method 400 for placing a last-minute hall call request to a departing cab using gestures in accordance with one or more embodiments is shown. The method 400 begins at block 402 and continues to block 404 which provides for detecting, using one or more sensing devices, a gesture of a potential passenger. In one or more embodiments, a single camera is installed in a lobby or hallway and is configured to monitor passengers approaching the one or more elevators in the vicinity.

The method 400 proceeds to block 406 and provides for analyzing the gesture of the potential passenger. The video data that is captured by the camera is processed by a video processor and is further processed by a video analyzer to analyze the presence and/or absence of gesture data of the video. At block 408, the method 408 provides for predicting a call request based at least in part on the analysis of the gesture. In one or more embodiments, an elevator call request is predicted based on the analyzed gesture data. The gesture data can include one or more of an approaching passenger that is running, making a hand motion, and is directed towards a particular elevator. It should be understood that different gestures, as well as combinations of gestures, can be used in predicting if the approaching passenger is intending to place a hall call request.

The method 400 at block 410 provides for controlling an operation of a system based at least in part on the predicted call request. In an example, the system is an elevator system and the departure of the elevator car of the elevator system is delayed to allow the approaching passenger to board responsive to predicting a hall call request. In other embodiments, the load of the elevator car can be detected using sensors to determine if the elevator car should be delayed from departing. It should be understood that other factors can be sensed by the system and used to control the elevator car based on predicting the hall call request. The method 400 ends at block 412.

The technical effects and benefits include providing a flexible and easy way to request a departing cab. By detecting a gesture of an approaching passenger the hall call request can be placed prior to reaching the elevator call request buttons in the lobby or hallway. The technical effects and benefits include reducing the number of elevator trips, increased passenger experience, and time savings for the passenger.

As described above, embodiments can be in the form of processor-implemented processes and devices for practicing those processes, such as a processor. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes a device for practicing the embodiments. When implemented on a general-purpose microprocessor, the computer program code segments configure the microprocessor to create specific logic circuits.

The term "about" is intended to include the degree of error associated with measurement of the particular quantity and/or manufacturing tolerances based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present disclosure is not thus limited. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description but is only limited by the scope of the appended claims.

## Claims

1. A system comprising:
a sensing device that is in communication with a processor, wherein the sensing device is configured to monitor and detect a gesture from a potential passenger;
a processor configured to process video data received from the sensing device;
a video analyzer configured to predict a hall call request based at least in part on the gesture;
a controller configured to control an operation of the system based at least in part on predicting the hall request.

2. The system of claim 1, wherein the controller is an elevator controller configured to control an operation of an elevator car.

3. The system of claim 1 or 2, further comprising a multi-elevator system, wherein the camera provides an input to control a plurality of elevator cars.

4. The system of claim 3, wherein the plurality of elevator controllers are coupled to a central controller (CPIB), the CPIB is in communication with the processor to transmit a hall call request command to the plurality of elevator controllers to delay the departure of an elevator car of the plurality of elevators.

5. The system of any preceding claim, wherein the video analyzer is configured to predict a hall call request based at least in part on the gesture data.

6. The system of claim 5, wherein the video analyzer is configured to determine the gesture includes at least one of a direction of the potential passenger, a running speed of the potential passenger, or a hand motion of the potential passenger received from the processor using video content analytics to predict the hall request.

7. The system of any preceding claim, further comprising a load sensor configured to detect a load of an elevator car prior to controlling the system based at least in part on predicting the hall request.

8. The system of any preceding claim, wherein controlling the system includes at least one of delaying the departure of an elevator car, opening closed elevator doors, or delaying a closing of elevator doors of the elevator car.

9. The system of any preceding claim, wherein the sensing device is a video camera.

10. A method comprising:
detecting, using one or more sensing devices, a gesture of a potential passenger;
analyzing the gesture of the potential passenger;
predicting a call request based at least in part on the analysis of the gesture; and
controlling an operation of a system based at least in part on the predicted call request.

11. The method of claim 10, further comprising detecting a load of the elevator car; and
controlling the operation of the system is based at least in part on the load of the elevator and the predicted gesture.

12. The method of claim 10 or 11, wherein analyzing the gesture determines at least one of a direction of the potential passenger, a running speed of the potential passenger, or a hand motion of the potential passenger received from the processor using video content analytics; and optionally
wherein the video analyzer is configured to predict a hall call request based at least in part on the gesture data.

13. The method of claim 10, 11 or 12, further comprising a multi-elevator system, wherein the one or more sensing devices receive an input to control a plurality of elevator cars; and optionally
wherein a plurality of elevator controllers are coupled to a central controller (CPIB), the CPIB is in communication with a processor to transmit a hall call request command to the plurality of elevator controllers delay the departure of an elevator.

14. The method of claim 13, wherein the one or more sensing device is a camera configured to capture video of the potential passenger.

15. The method of any of claims 10 to 14, further comprising receiving load sensor data of an elevator car prior to controlling the system based at least in part on predicting the hall request; and optionally
wherein controlling the system includes at least one of delaying the departure of an elevator car or delaying a closing of elevator doors of the elevator car.
